# EUROPEAN PATENT SPECIFICATION

(11) **EP 3 395 921 B1**
(45) Date of publication and mention of the grant of the patent: **20.11.2019**
(21) Application number: 18168061.2
(22) Date of filing: 18.04.2018
(51) Int. Cl.: C09J 129/04

(54) **NON-TOXIC GLUE COMPOSITIONS**
NICHTTOXISCHE KLEBSTOFFZUSAMMENSETZUNGEN
COMPOSITIONS DE COLLE NON TOXIQUE

(30) Priority: 28.04.2017 GB 201706809
(43) Date of publication of application: 31.10.2018
(73) Proprietor: Maxmat Ltd., Bristol BS1 5EH (GB)
(72) Inventor: MORGAN, Helen, Bristol, Avon BS20 7SA (GB); MORGAN, Ben, Bristol, Avon BS20 7SA (GB)
(74) Representative: Wilkinson, Stephen John

(56) References cited:
- CN-A- 105 462 523
- US-A- 5 322 880

## Description

The present invention relates to non-toxic glue compositions. More particularly, it relates to glue compositions which, although they can be used by anyone, are especially suitable for use by children.

Glues and adhesives are necessary for many manufacturing processes, medical procedures and domestic applications. The formulations of such products are designed to provide the properties, such as tack and development of adhesive strength, required for the particular use. Many adhesive agents, solvents or other components of such formulations are hazardous and the use of many types of commercially-available adhesive formulations must be carried out with care in order to minimize health risks for the user. Products, such as these, are not suitable for use by children.

Participation in arts and crafts by children is encouraged by parents and teachers, not only to keep children busy and entertained, but also to allow children to develop creative skills and dexterity. Glues for use by children must be non-toxic and safe. They should not, for instance, contain any toxic ingredients that can cause health problems if inhaled, ingested or brought into contact with the skin. In addition, because children's play can often be messy, glues for use by children should be capable of easy removal from skin and clothing by washing with water. The object of the present invention is to provide glue compositions which meet these requirements.

The present invention provides a non-toxic glue composition suitable for use by children, which composition comprises a mixture of (a) a non-toxic fibrous material having a fibre length not greater than 5mm and (b) an aqueous solution containing (i) a water-soluble adhesive component selected from PVOH (poly(vinyl alcohol)) or pine resin, (ii) a water-soluble or water-miscible, non-toxic preservative, where the glue composition comprises from 1 to 20% fibrous material, 5 to 60% adhesive component and 1 to 10% preservative, all percentages being by weight based on the weight of the glue composition.

The invention further provides a pre-mix for addition to water to form the non-toxic glue composition of the invention, which pre-mix comprises a non-toxic fibrous material having a fibre length not greater than 5mm, a solid particulate water-soluble adhesive component selected from PVOH (poly (vinyl alcohol)) or pine resin, a solid particulate non-toxic water-soluble preservative or a liquid non-toxic water-miscible preservative.

The glue composition of the invention comprises a non-toxic fibrous material. The use of a fibrous material improves the strength of the bond formed by the glue composition when used to bond articles together. We believe this is because the fibrous material increases the friction between the surfaces of articles being bonded together so that they do not slide easily over one another. This feature is particularly useful when the articles being bonded together are formed of a plastics material, such as toy building bricks. The fibrous material comprises fibres having a length of not greater than 5mm. We have found that the use of a fibrous material having fibres greater than 5mm in length has a deleterious effect ton the properties of the glue composition. For instance, glue compositions containing fibres longer than 5mm tend to form long strings and, thus, ultimately render the glue composition unworkable and/or unusable. Long fibres also make the glue composition visually unattractive and introduce a gritty or lumpy consistency to the composition.

According to one embodiment, the fibrous material comprises nylon fibres having a fibre length not greater than 5mm. Any commercially-available nylon (polyamide) fibres can be used as the fibrous material. Typically, such nylon fibres will have a thickness not greater than 100 decitex.

According to a different embodiment, the fibrous material consists of bamboo fibres, i.e. particles obtained by comminuting bamboo stalks, having a fibre length not greater than 5mm. The use of such bamboo particulates has the advantage over synthetic polymer fibres in that they have the ability to absorb the aqueous solution and, thus, improve the strength of the bond created between the surfaces of the articles being bonded together. Since the bamboo particulates have rough surfaces, they increase the friction between the surfaces of the articles being bonded together. Bamboo is naturally antibacterial and so glue compositions containing bamboo particulates have the advantage of being more resistant to bacterial growth. Since long bamboo fibres can discolour the glue composition and make it gritty, we prefer to use bamboo particulates in the present invention that are typically 1mm or less in length.

According to an embodiment, the fibrous material consists of bamboo fibres having a fibre length of about 1mm. According to a different embodiment, the fibrous material consists of bamboo fibres having a fibre length of 500 µm or less.

According to a further embodiment, the fibrous material consists of a mixture of bamboo fibres having a fibre length of about 1mm with bamboo fibres having a fibre length of 500 µm or less. Suitable bamboo fibres for use in the glue compositions of the invention are available commercially as JELUCEL (trade mark) from Jelu-Werk Josef Ehrler GmbH & Co KG.

According to a different embodiment, the fibrous material consists of fibres formed of poly(vinyl alcohol) (PVOH) having a fibre length not greater than 5mm.

It is possible, according to the invention, to use mixtures of two or more different types of fibrous material. For example, the fibrous material used in the glue compositions of the invention may consist of any mixture of two or more materials selected from bamboo particulates, nylon fibres and poly (vinyl alcohol) fibres, as described above.

The non-toxic glue composition of the invention contains the fibrous material in an amount of from 1 to 20% by weight, based on the total weight of the glue composition. The use of less than 1% by weight of the fibrous material does not provide any significant improvement in the strength of the bond created between the articles being bonded together. Preferably, the glue composition contains at least 5% by weight of the fibrous material based on the weight of the glue composition. The use of more than 20% by weight of the fibrous material based on the total weight of the glue composition increases the grittiness of the composition and causes the composition to have an unappealing visual character. More importantly, glue compositions containing more than 20% by weight of the fibrous material tend to produce lower bonding strength between articles being bonded together. Preferably, therefore, the glue composition will not contain more than 15% by weight of the fibrous material based on the total weight of the glue composition. According to a preferred embodiment, the glue composition contains from 5 to 15% by weight and, more particularly, from 8 to 15% by weight, of the fibrous material based on the total weight of the glue composition.

In the glue composition of the invention, the non-toxic fibrous material is present as a mixture with an aqueous solution containing, *inter alia,* the dissolved adhesive component.

The adhesive component in the glue composition is a water-soluble component and is either PVOH (poly (vinyl alcohol)) or pine resin.

PVOH is a colourless and odourless water-soluble synthetic polymer. It has no irritant effect on the skin or on the eye and is generally considered not to have any harmful effect when ingested. It has good film-forming and adhesive properties. It is easily available commercially. Pine resin is manufactured from pine sap and is, also, commercially-available. According to a preferred embodiment, PVOH is used as the water-soluble adhesive component in the glue composition of the present invention.

The glue composition contains from 5 to 60% by weight, based on the total weight of the glue composition, of the adhesive component. Typically, the glue composition will contain 20 to 60% by weight and preferably 40 to 60% by weight of the adhesive component based on the total weight of the glue composition in order to achieve good bonding properties.

The aqueous solution containing the adhesive component also contains a non-toxic preservative. A preservative is an essential component of the glue composition to prevent the growth of bacteria, fungus or other microorganisms that might have an adverse effect on the health of a child if ingested or brought into contact with the child's skin or eye. To avoid the possibility that the preservative itself might have an adverse effect on the health of a human, it is preferred that the preservative is selected from food-grade preservatives. The non-toxic preservative comprises one or more than one water-soluble compound or comprises one or more than one water-miscible liquid, for example a water-miscible organic compound which is liquid at room temperature (20°C).

The non-toxic preservative, as mentioned above, may be a water-soluble compound, for example sodium benzoate which is known to have bacteriostatic and fungi-static properties. Water-soluble, non-toxic acids are also known to have preservative properties. By the term "non-toxic acid", we mean that the acid is edible and is non-irritating on the skin or eye of a human. Such a non-toxic acid will, typically, be a food-grade acid and acids of this type are well known. Preferably, the non-toxic acid is citric acid. The preservative properties of some water-soluble compounds are optimised under acid conditions and, therefore, according to a preferred embodiment, the non-toxic preservative used in the glue compositions of the invention will comprise a mixture of a non-toxic water-soluble compound, such as sodium benzoate, and a water-soluble, non-toxic acid, since the presence of the water-soluble non-toxic acid in the composition ensures that the composition has a pH below 7. Especially preferred is a preservative comprising sodium benzoate and citric acid, since the use of citric acid can result in the composition having a pH of 5 or lower, thus optimising the preservative action of the sodium benzoate.

According to a different embodiment, the non-toxic preservative used in the glue compositions of the invention may be one or more than one water-miscible liquid organic compound. Particularly preferred, in this respect, is propylene glycol.

The preservative is present in the glue composition in an amount of from 1 to 10% by weight based on the total weight of the composition. In the case of a preservative which comprises a water-soluble compound that has optimised preservative properties in acidic conditions, such as sodium benzoate, together with a water-soluble non-toxic acid, such as citric acid, the amount of the water-soluble preservative compound, such as sodium benzoate, in the glue composition will be greater than 0% and typically not more than 2% by weight, preferably from 0.1 to 1.5% by weight, based on the total weight of the glue composition and the amount of the water-soluble, non-toxic acid, such as citric acid, in the glue composition is typically from 1 to 7% by weight, preferably from 4 to 7% by weight and more preferably from 4 to 6% by weight, based on the total weight of the glue composition.

The glue composition may, additionally, contain a non-toxic colouring agent, such as a dye, in order to facilitate the identification of surfaces to which the glue composition has been applied. The colouring agent may be a pigment or dye mixed into the glue composition generally or into the aqueous solution containing the adhesive component. According to an embodiment, the composition contains fibres as described above which, themselves, are coloured, for instance by means of a dye.

The glue composition provides a strong but temporary bond and can be used by children to enhance their play with model toys and building bricks or other components of a larger structure. It is not intended for repair or for providing a permanent bond. The glue composition and bonds between structures obtained by its use can be removed easily by washing with warm, soapy water.

The glue composition of the invention can be applied by spraying and is suitable for delivery via an aerosol spray. A formulation for delivery via an aerosol spray will contain fibres of a size which will not cause clogging of the aerosol nozzle. For a stronger bond and a more precise application, the composition is preferably applied direct to the substrate by brushing or by using an equivalent application method.

The glue composition can be prepared ready for use from a pre-mix by adding the appropriate amount of water and, preferably applying heat, to bring about the dissolution of the soluble or miscible components. The size of the particulate water-soluble solids in the pre-mix will affect the ease with which these solids will dissolve. It is preferred to mix the pre-mix formulation with boiling water and, subsequently, subject the water and formulation mixture to further heating to ensure dissolution of the water-soluble solids or any miscible liquid. One way of subjecting the water and formulation mixture to further heating is to treat it to microwave radiation. Obviously, the use of boiling water and heating procedures in the preparation of the glue composition from the pre-mix is not intended to be carried out by the child user of the glue when prepared.

Thus, the present invention also provides a pre-mix for addition to water which, when added to water and then subjected to heating, forms the non-toxic glue composition of the invention described herein, which pre-mix comprises a non-toxic fibrous material having a fibre length not greater than 5mm, a solid, particulate water-soluble adhesive component selected from PVOH (poly(vinyl alcohol)) or pine resin and a solid, particulate non-toxic water-soluble preservative or a liquid non-toxic water-miscible preservative. The amounts of the fibrous material, adhesive component, and preservative contained in the pre-mix are such that, on adding an appropriate amount of water and allowing or causing the dissolution of the soluble components in the water, with the application of heat if necessary, a glue composition as described above is obtained, i.e. one that contains 1 to 20% fibrous material, 5 to 60% water-soluble adhesive component and 1 to 10% preservative, all percentages being by weight based on the total weight of the glue composition. The fibrous material, adhesive component and preservative used in the pre-mix are as described above.

It will be apparent that if the adhesive component and the preservative are provided, in the pre-mix, in the form of dry, water-soluble, powders, particles or granules, then the pre-mix itself, which also contains dry fibrous material, will be a dry mix ready for mixing with the appropriate amount of water to form the glue composition of the invention.

In the case where the adhesive component is provided, in the pre-mix, as water-soluble powder, particles or granules and the preservative used is a water-miscible, organic liquid, such as propylene glycol, the pre-mix, which also contains the fibrous material, may take the form of a paste or plastic mass which can be moulded. For ease of use, the pre-mix can be provided in the form of a moulded shape, for instance by using an injection moulding technique.

### Example

### Formulation for direct application

PVOH crystals (Japan Vam & Poval Co. Ltd.) (10g), sodium benzoate (0.2g), citric acid (1.5g), 5mm nylon fibres (Campbell Coutts Ltd.) (0.5g) and bamboo fibre particulates (Wu Yi Shan Organic Bamboo Industries) (0.5g), were added to 20g boiling water and mixed to provide a non-toxic glue which, when cooled, is suitable for use by children.

When cooled, the glue was applied by brushing to Lego™ plastic building bricks. The surfaces of the contacting surfaces of the bricks were coated with the glue and the bricks were assembled into a model. The model was left to dry for 5 to 10 hours.

When required, the model was broken up by hand and the pieces were then washed for about 20 minutes in warm (15°-20°C) water to remove the glue.

## Claims

1. A non-toxic glue composition suitable for use by children which composition comprises a mixture of (a) a non-toxic fibrous material having a fibre length not greater than 5mm and (b) an aqueous composition containing (i) a water-soluble adhesive component selected from PVOH (poly (vinyl alcohol)) or pine resin, (ii) a water-soluble or water-miscible, non-toxic preservative, wherein the glue composition comprises 1 to 20% fibrous material, 5 to 60% adhesive component and 1 to 10% preservative, all percentages being by weight based on the total weight of the glue composition.

2. A non-toxic glue composition according to claim 1, wherein the non-toxic fibrous material is selected from bamboo particulates, nylon fibres, poly (vinyl alcohol) fibres and any mixture thereof.

3. A non-toxic glue composition according to claim 2, wherein the non-toxic fibrous material comprises bamboo fibres.

4. A non-toxic glue composition according to claim 2, wherein the non-toxic fibrous material comprises nylon fibres.

5. A non-toxic glue composition according to any one of claims 1 to 4, wherein the adhesive component is PVOH (poly (vinyl alcohol)) and is present in the aqueous solution in an amount of from 5 to 60% by weight.

6. A non-toxic glue composition according to any one of claims 1 to 5, wherein the preservative comprises sodium benzoate and a water-soluble, non-toxic acid.

7. A non-toxic glue composition according to claim 6, wherein the water-soluble, non-toxic acid is citric acid.

8. A non-toxic glue composition according to claim 7, wherein the citric acid is present in the aqueous composition in an amount of 1 to 7% by weight and the sodium benzoate is present in the aqueous composition in an amount of from 0.1 to 2% by weight.

9. A non-toxic glue composition according to claim 8, wherein the citric acid is present in the aqueous composition in an amount of 4 to 7% by weight and the sodium benzoate is present in the aqueous composition in an amount of from 0.1 to 1.50% by weight.

10. A non-toxic glue composition according to any one of claims 1 to 5, wherein the preservative comprises propylene glycol.

11. A non-toxic glue composition according to any one of claims 1 to 10 which additionally contains a non-toxic colouring component.

12. A non-toxic glue composition according to any one of claims 1 to 11, wherein the non-toxic fibrous material contains a dye.

13. A pre-mix for addition to water to form the non-toxic glue composition of claim 1, comprising a non-toxic fibrous material having a fibre length not greater than 5mm, a solid particulate water-soluble adhesive component selected from PVOH (poly (vinyl alcohol)) or pine resin and a solid, particulate, non-toxic water-soluble preservative or a liquid, non-toxic, water-miscible preservative.

## Patentansprüche

1. Eine nicht toxische Klebstoffzusammensetzung, die von Kindern verwendet werden kann, wobei die Zusammensetzung eine Mischung eines (a) nicht toxischen Fasermaterials mit einer Faserlänge von nicht mehr als 5 mm und (b) eine wässrige Zusammensetzung, die (i) eine wasserlösliche Klebstoffkomponente, die aus PVOH (Polyvinylalkohol) oder Kiefernharz ausgewählt wird, (ii) ein wasserlösliches oder wassermischbares, nicht toxisches Konservierungsmittel umfasst, wobei die Klebstoffzusammensetzung 1 bis 20% Fasermaterial, 5 bis 60% Klebstoffkomponente und 1 bis 10% Konservierungsmittel umfasst, wobei alle Prozentsätze Gewichtsanteile auf der Basis des Gesamtgewichts der Klebstoffzusammensetzung sind.

2. Eine nicht toxische Klebstoffzusammensetzung entsprechend Anspruch 1, wobei das nicht toxisches Fasermaterial aus Bambuspartikeln, Nylonfasern, Poly(vinylalkohol)fasern und Mischungen dieser ausgewählt wird.

3. Eine nichttoxische Klebstoffzusammensetzung entsprechend Anspruch 2, wobei das nicht toxische Fasermaterial Bambusfasern umfasst.

4. Eine nicht toxische Klebstoffzusammensetzung entsprechend Anspruch 2, wobei das nichttoxische Fasermaterial Nylonfasern umfasst.

5. Eine nicht toxische Klebstoffzusammensetzung entsprechend einem der Ansprüche 1 bis 4, wobei die Klebstoffkomponenten PVOH (Polyvinylalkohol) ist und in der wässrigen Lösung in einer Menge von 5 bis 60 Gew.-% vorhanden ist.

6. Eine nicht toxische Klebstoffzusammensetzung entsprechend einem der Ansprüche 1 bis 5, wobei das Konservierungsmittel Natriumbenzoat und eine wasserlösliche, nicht toxische Säure umfasst.

7. Eine nicht toxische Klebstoffzusammensetzung entsprechend Anspruch 6, wobei die wasserlösliche, nicht toxische Säure Zitronensäure ist.

8. Eine nicht toxische Klebstoffzusammensetzung entsprechend Anspruch 7, wobei die Zitronensäure in der wässrigen Zusammensetzung in einer Menge von 1 bis 7 Gew.-% vorhanden ist und das Natriumbenzoat in der wässrigen Zusammensetzung in einer Menge von 0,1 bis 2 Gew.-% vorhanden ist.

9. Eine nicht toxische Klebstoffzusammensetzung entsprechend Anspruch 8, wobei die Zitronensäure in der wässrigen Zusammensetzung in einer Menge von 4 bis 7 Gew.-% vorhanden ist und das Natriumbenzoat in der wässrigen Zusammensetzung in einer Menge von 0,1 bis 1,50 Gew.-% vorhanden ist.

10. Eine nicht toxische Klebstoffzusammensetzung entsprechend einem der Ansprüche 1 bis 5, wobei das Konservierungsmittel Propylenglycol umfasst.

11. Eine nicht toxische Klebstoffzusammensetzung entsprechend einem der Ansprüche 1 bis 10, die zusätzlich einen nicht toxischen Farbstoffbestandteil umfasst.

12. Eine nicht toxische Klebstoffzusammensetzung entsprechend einem der Ansprüche 1 bis 11, wobei das nicht toxische Fasermaterial einen Farbstoff enthält.

13. Eine Vormischung zur Zugabe zu Wasser, um die nicht toxische Klebstoffzusammensetzung von Anspruch 1 zu bilden, die ein nicht toxisches Fasermaterial mit einer Faserlänge von nicht mehr als 5 mm, feste Partikel der wasserlöslichen Klebstoffkomponente, die aus PVOH (Polyvinylalkohol) oder Kiefernharz ausgewählt wird, und feste Partikel des wasserlöslichen oder wassermischbaren, nicht toxisches Konservierungsmittels oder ein flüssiges nicht toxisches, wassermischbares Konservierungsmittel umfasst

## Revendications

1. Composition de colle non-toxique convenant à l'usage par des enfants, la composition comprenant un mélange (a) d'un matériau fibreux non-toxique possédant une longueur de fibre inférieure ou égale à 5 mm et (b) d'une composition aqueuse contenant (i) un ingrédient adhésif soluble dans l'eau sélectionné parmi le PVOH (alcool polyvinylique) ou la résine de pin, (ii) un agent de conservation soluble dans l'eau ou miscible à l'eau, dans laquelle la composition de colle comprend 1 à 20 % de matériau fibreux, 5 à 60 % d'ingrédient adhésif et 1 à 10 % d'agent de conservation, tous les pourcentages étant des pourcentages massiques par rapport à la masse totale de la composition de colle.

2. Composition de colle non-toxique selon la revendication 1, dans laquelle le matériau fibreux non-toxique est sélectionné parmi les particules de bambou, les fibres de nylon, les fibres d'alcool polyvinylique et les mélanges de ceux-ci.

3. Composition de colle non-toxique selon la revendication 2, dans laquelle le matériau fibreux non-toxique comprend des fibres de bambou.

4. Composition de colle non-toxique selon la revendication 2, dans laquelle le matériau fibreux non-toxique comprend des fibres de nylon.

5. Composition de colle non-toxique selon l'une des revendications 1 à 4, dans laquelle l'ingrédient adhésif est le PVOH (alcool polyvinylique) et est présent dans la solution aqueuse dans une quantité de 5 à 60 % (m/m).

6. Composition de colle non-toxique selon l'une des revendications 1 à 5, dans laquelle l'agent de conservation comprend le benzoate de sodium et un acide non-toxique soluble dans l'eau.

7. Composition de colle non-toxique selon la revendication 6, dans laquelle l'acide non-toxique soluble dans l'eau est l'acide citrique.

8. Composition de colle non-toxique selon la revendication 7, dans laquelle l'acide citrique est présent dans la composition aqueuse dans une quantité de 1 à 7 % (m/m) et le benzoate de sodium est présent dans la composition aqueuse dans une quantité de 0,1 à 2 % (m/m).

9. Composition de colle non-toxique selon la revendication 8, dans laquelle l'acide citrique est présent dans la composition aqueuse dans une quantité de 4 à 7 % (m/m) et le benzoate de sodium est présent dans la composition aqueuse dans une quantité de 0,1 à 1,50 % (m/m).

10. Composition de colle non-toxique selon l'une des revendications 1 à 5, dans laquelle l'agent de conservation comprend le propylène glycol.

11. Composition de colle non-toxique selon l'une des revendications 1 à 10 contenant en outre un ingrédient colorant non-toxique.

12. Composition de colle non-toxique selon l'une des revendications 1 à 11, dans laquelle le matériau fibreux non-toxique contient une teinture.

13. Prémélange à ajouter à de l'eau pour former la composition de colle non-toxique de la revendication 1, comprenant un matériau fibreux non-toxique possédant une longueur de fibre inférieure ou égale à 5 mm, un ingrédient adhésif solide particulaire sélectionné parmi le PVOH (alcool polyvinylique) ou la résine de pin et un agent de conservation non-toxique solide particulaire soluble dans l'eau ou un agent de conservation non-toxique liquide miscible à l'eau.
